# EUROPÄISCHE PATENTSCHRIFT

(11) **EP 1 418 528 B1**
(45) Veröffentlichungstag und Bekanntmachung des Hinweises auf die Patenterteilung: **04.05.2005**
(21) Anmeldenummer: 03027001.1
(22) Anmeldetag: 05.04.1997
(51) Int. Cl.: G06K 7/06, G06K 7/00

(54) **Chipkartenleser**
Chip card reader
Lecteur de carte à puce

(30) Priorität: 22.04.1996 DE 29607253 U
(43) Veröffentlichungstag der Anmeldung: 12.05.2004
(62) Teilanmeldung aus: 97105660.1
(73) Patentinhaber: Stocko Contact GmbH & Co. KG, 42327 Wuppertal (DE)
(72) Erfinder: Klatt, Dieter, 42489 Wülfrath (DE); Pelke, Bernhard, 42119 Wuppertal (DE)
(74) Vertreter: Stenger, Watzke & Ring Patentanwälte

(56) Entgegenhaltungen:
- EP-A- 0 704 813
- US-A- 5 184 282

## Beschreibung

Die Erfindung betrifft eine Kontaktiereinheit für ein kartenförmiges Trägerelement elektronischer Baugruppen, insbesondere nach PCMCIA-Norm, mit den Merkmalen des Oberbegriffs des Anspruchs 1. Eine derartige Kontaktiereinheit ist beispielsweise aus der EP 0 704 813 A2 bekannt.

Im Bereich der Computertechnologie werden elektronische Baugruppen vorzugsweise auf kartenförmigen Trägerelementen angeordnet. Diese weisen Kontaktbereiche auf und sind in Kontaktiereinheiten einschiebbar, wo sie elektrisch kontaktiert und in den Datenkreislauf integriert werden. Hierzu gehören die sogenannten Chipkarten, die derzeit beispielsweise als Telefonkarten Verwendung finden. Sie weisen flächig angeordnete Kontaktfelder für die Kontaktierung eines Chips auf und werden in als Leseeinheiten ausgebildete Kontaktiereinheiten eingeschoben.

Ferner sind beispielsweise aus der DE 295 05 678 U1 oder der DE 296 02 632 U1 kartenförmige Trägerelemente nach PCMCIA-Norm bekannt, die ein genormtes matrixartiges, an ihrer vorderen Einsteckkante ausgebildetes, steckbares Anschlußkontaktfeld aufweisen und unterschiedlichste IC-Schaltkreise aufnehmen können. Derartige Karten können Speichererweiterungskarten, Laufwerkskarten, Modemkarten u. dgl. sein. Sie lassen sich in Kontaktiereinheiten mit einer entsprechenden Stiftmatrix kontaktieren, wozu sie in den Einschubschlitz, beispielsweise eines Computers eingeschoben werden.

Aus der EP 0552 078 A1 ist ferner die Kombination dieser bekannten Kartensysteme bekannt, wodurch gleichzeitig eine PCMCIA-Karte und eine Chipkarte in einen entsprechenden Modulaufnahmeschlitz eines Computers eingeschoben und gelesen werden können. Nachteilig sind hier das Freiliegen des Kontaktfeldes und die mangelhafte Führung der Chipkarte, die darüber hinaus auch in ihrer Betriebsposition relativ zur PCMCIA-Karte bewegbar ist, so dass eine sichere Kontaktierung nicht gewährleistet ist.

Eine besondere Ausbildung der Chipkartenaufnahme und Möglichkeit zum einfachen Anschluß an den Computer wird hierzu in der DE 43 10 517 A1 vorgeschlagen, indem an der Kontaktiereinheit der PCMCIA-Karte ein Einschubkanal für die Chipkarte und eine Einschubführung ausgebildet sind, die einen gegenüber der PCMCIA-Karte vorstehenden Bereich aufweist, der ein sicheres Einstecken der gesamten Kontaktiereinheit in den Modulaufnahmeschlitz des Computers ermöglicht. Nachteiligerweise weicht dieser Vorschlag jedoch stark von der normierten Ausgestaltung der PCMCIA-Karte ab und kann ebenfalls nicht sicherstellen, dass die Chipkarte in ihrer Kontaktierungsposition unverschiebbar ist. Ein sicherer Betrieb im Sinne einer Vielfachbetätigung an Automaten und dgl. kann mit den vorbekannten Kontaktiereinheiten nicht gewährleistet werden. Darüber hinaus ist durch die an den Längsseiten völlig offene Konstruktion des Gehäuses die mechanische Stabilität der Kontaktiereinheit und deren Torsionssteifigkeit gering, so dass die Funktionssicherheit im Langzeitbetrieb gefährdet ist.

Ausgehend von diesem Stand der Technik liegt der Erfindung die Aufgabe zugrunde, eine Kontaktiereinheit der eingangs genannten Art unter Meidung der beschriebenen Nachteile dadurch zu verbessern, dass eine sichere Halterung, Kontaktierung und Führung in der Kombination einer PCMCIA-Karte mit einer einschiebbaren Chipkarte gewährleistet ist und das Gehäuse der Kontaktiereinheit bei kleinsten Abmessungen eine hohe Torsionssteifigkeit, Festigkeit und damit Dauerhaltbarkeit aufweist.

Die Aufgabe ist bei einer Kontaktiereinheit mit den Merkmalen des Oberbegriffs des Anspruchs 1 erfindungsgemäß durch die Merkmale des kennzeichnenden Teils des Anspruchs 1 gelöst.

Vorzugsweise besteht die Kontaktiereinheit aus einem Gehäuse mit einem die Leiterplatte der PCMCIA-Karte haltenden Rahmen, an dessen einer Stirnseite die Einschubführung und an dessen anderer Stirnseite das Anschlußfeld angeordnet sind, die durch die mit Abstand parallel zur Leiterplatte verlaufende Basisplatte miteinander verbunden sind derart, dass ein Einschubkanal für die Chipkarte gebildet ist, der endseitig durch die beiden Anschläge und Klemmnocken begrenzt ist, wobei die seitlichen Abdeckungen zwischen Einschubführung und Anschlußfeld den Rahmen bis zur Dicke der Leiterplatte bedecken und den Einschubkanal seitlich freilassen. Vorteilhafterweise sind die seitlichen Abdeckungen an einem den Rahmen an der Oberseite abschließenden Deckelelement, insbesondere aus Blech, durch leistenförmige Abbiegungen zur U-Querschnittsform ausgebildet, um die Gehäusefestigkeit weiter zu erhöhen.

Diesem Ziel dient auch der weitere Vorschlag der Erfindung, den Rahmen als einstückiges Kunststoffteil auszubilden und mit der Basisplatte und dem Deckelelement zu einer Einheit zu verbinden, wobei die Basisplatte und das Deckelelement als einstückiges Blechteil ausgebildet sind. Die Einschubführung kann in zweckmäßiger Ausgestaltung der Erfindung mit Einlaufschrägen ausgestattet sein und es kann der den Klemmnocken gegenüberliegende Bereich mit einer Ausnehmung zurückspringend ausgebildet sein, um die Einführung, Entarretierung und Entnahme der Chipkarte zu vereinfachen.

Weitere Einzelheiten, Vorteile und Merkmale der Erfindung ergeben sich aus der nachfolgenden Beschreibung der zugehörigen Zeichnung, in der zwei bevorzugte Ausführungsformen eines erfindungsgemäßen Kombichipkartenlesers schematisch dargestellt sind. In der Zeichnung zeigt:
- Fig. 1: eine Kontaktiereinheit perspektivisch mit in Einsteckvorbereitung befindlichen Chipkarten;
- Fig. 2: eine modifizierte Kontaktiereinheit und
- Fig.3: eine Explosionsdarstellung der Kontaktiereinheit der Fig. 2 perspektivisch.

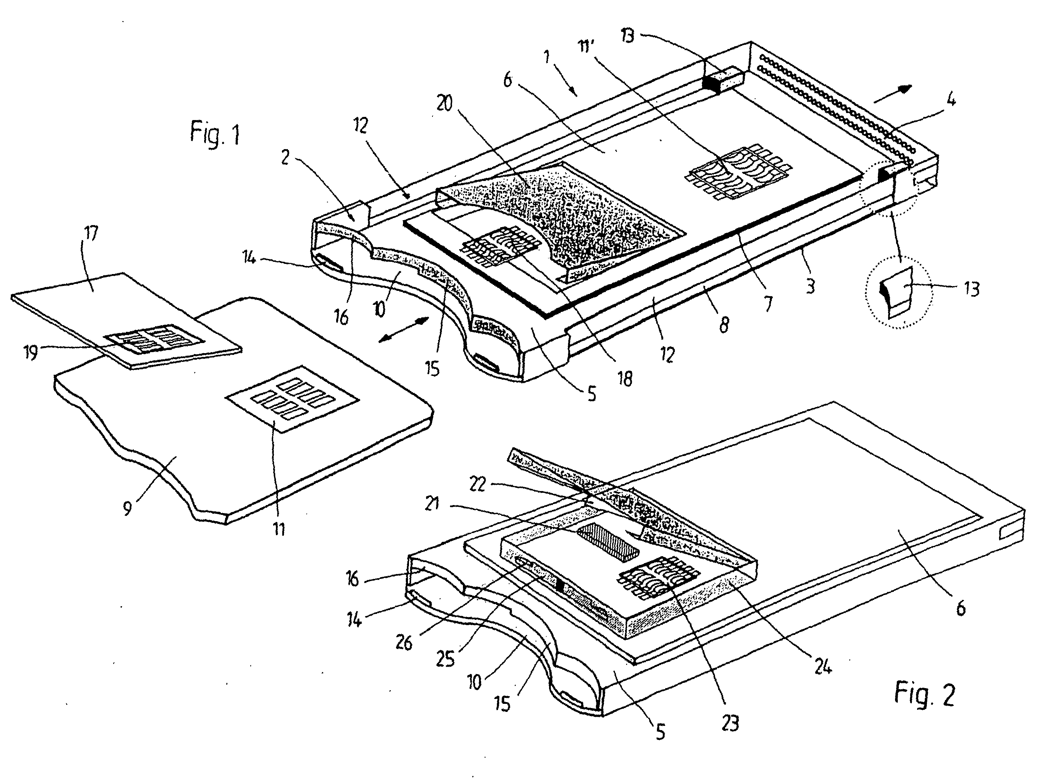

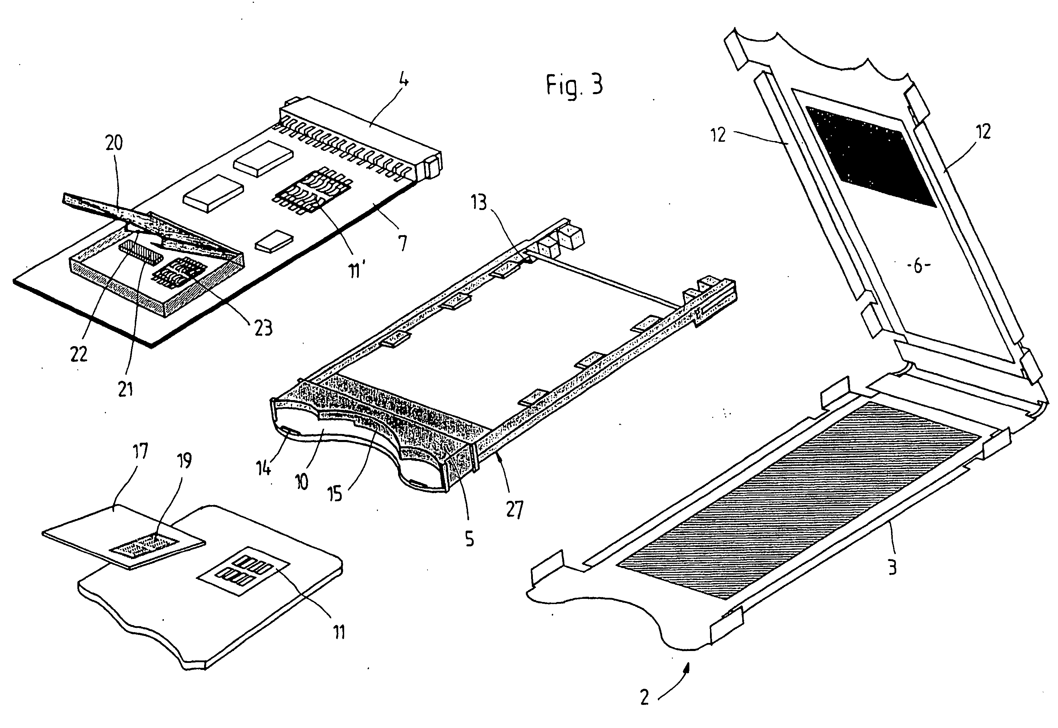

Das in Fig. 1 dargestellte Ausführungsbeispiel der Erfindung zeigt eine als Kombichipkartenleser ausgebildete Kontaktiereinheit 1, die vorgesehen ist, über eine normgemäße PCMCIA-Schnittstelle mit einem Computer kontaktiert zu werden. Die Kontaktiereinheit 1 besteht aus einem Gehäuse 2 mit einer Basisplatte 3, einem Anschlußfeld 4 an dem in Einschubrichtung gemäß Pfeil vorderen Ende, einer Einschubführung 5 am gegenüberliegenden Ende und einem parallel mit Abstand zur Basisplatte 3 sich erstreckenden Deckelelement 6, welches - wie die Basisplatte 3 - das Anschlußfeld 4 mit der Einschubführung 5 starr verbindet. Die Basisplatte 3 und das Deckelelement 6 sind als einstückiges Blechteil entsprechend Fig. 3 ausgebildet. Dabei werden die genannten Elemente von einem innenliegenden Rahmen 27 aus PCB getragen (siehe Fig. 3), der eine PCMCIA-Leiterplatte 7 mit Abstand parallel zur Basisplatte 3 derart hält, dass dazwischen ein Einschubkanal 8 für eine ISO 7816 Chipkarte 9 gebildet wird, die über einen Einschubschlitz 10 der Einschubführung 5 in die Kontaktiereinheit 1 einschiebbar ist. Die Chipkarte 9 läßt sich in Richtung des gezeigten Doppelpfeils in die Kontaktiereinheit 1 einschieben und aus dieser wieder herausziehen, wobei über das auf die Oberfläche angeordnete Chipfeld 11 der Chipkarte 9 und Kontaktelemente 11' auf der Unterseite der PCMCIA-Leiterplatte 7 eine Kontaktierung vornehmbar ist, die eine Verarbeitung der Chipkarte über die PCMCIA-Karte ermöglichen, wenn die letztgenannte in den Einschubschlitz eines elektronischen Verarbeitungsgerätes eingesetzt ist und mit dessen PCMCIA-Schnittstelle über das Anschlußfeld 4 verbunden ist.

Das Deckelelement 6 besteht - wie die Basisplatte 3 - aus Blech und ist zu einem U-förmigen Querschnitt seitlich abgebogen, um an beiden Längsseiten der Kontaktiereinheit 1 eine seitliche Blechabdeckung 12 bereitzustellen, die den PCB-Rahmen 27 bzw. die PCMCIA-Leiterplatte 7 bis zur unteren Längskante abdeckt, um eine komplette seitliche Gehäuseeinfassung der Leiterplatte 7 zu erhalten. Dabei ist das Deckelelement 6 und sind ggfs. die Blechabdeckungen 12 mit der Einschubführung 5 sowie dem Anschlußfeld 4 fest, insbesondere durch Verschweißen, verbunden, um ein insgesamt torsionssteifes durch den eingesetzten Rahmen 27 stabilisiertes Gehäuse 2 auszubilden. Der seitliche Bereich zwischen den Blechabdeckungen 12 und der Basisplatte 3 bleibt offen, so dass der Chipkartenführungsbereich ohne Abdeckung ist und die Gesamtbreite der Kontaktiereinheit im Computersteckbereich nur der genormten Breite der ISO-Chipkarte 9 entspricht. Um trotz des seitlich offenen Chipkartenführungsbereichs eine sichere Positionierung, Halterung und Kontaktierung der in den Einschubkanal 8 eingeschobenen Chipkarte 9 zu erreichen, sind am Einsteckende, dem Anschlußfeld 4 benachbart, eckenseitig zwei Anschläge 13 im Einschubkanal 8 angeordnet, deren Berührungsflächen mit der Chipkarte 9 korrespondierend zu deren Eckrundung oder -schräge ausgebildet sind, so dass sich eine zentrierende Führung der Chipkartenbewegung in die gewünschte Endposition beim Einschieben ergibt. Damit ist sowohl das Einstecken der Chipkarte in den Einschubkanal 8 durch die Einschubführung 5 als auch die Endpositionierung durch die Anschläge 13 geführt, deren Form in Fig. 1 durch eine vergrößerte Kreisausschnittszeichnung näher verdeutlicht ist.

Die Basisplatte 3 ist am Einschubschlitz 10 der Einschubführung 5, etwa den Anschlägen 13 gegenüberliegend mit geringfügig hochstehenden Klemmnocken 14 aus Metall oder Kunststoff versehen, mit denen die eingeschobene Chipkarte im Einschubkanal 8 festgesetzt wird, um ein ungewolltes Herausrutschen zu verhindern. Die Chipkarte 9 ist somit in Quer- und Längsrichtung arretiert. Zur besseren Einführung der Chipkarte können Einlaufschrägen an den Klemmnocken und/oder dem Einschubschlitz ausgebildet sein. Zur leichteren Entnahme der eingeschobenen und gemäß obiger Beschreibung fixierten Chipkarte 9 sind im Deckelelement 6 und/oder in der Basisplatte 3 mittige teilkreisförmige Aussparungen 15 vorgesehen, die dem Benutzer einen günstigen Zugriff zur Karte ermöglichen. Ergänzend sind die den Klemmnocken gegenüberliegenden Bereiche des Deckelelements 6 teilkreisförmig bei 16 zurückgesetzt, um die Einführung und Verriegelung der Chipkarte 9 zu erleichtern.

Mit der als Kombichipkartenleser ausgebildeten Kontaktiereinheit 1 ist ferner die Auswertung einer zusätzlichen Mini-Chipkarte 17 ermöglicht, indem auf der PCMCIA-Leiterplatte 7 ein elektrisches Kontaktelement 18 angeordnet ist, das einen Anschluß an den integrierten Schaltkreis der PCMCIA-Karte bereitstellt und durch das korrespondierend angeordnete Chipfeld 19 der Mini-Chipkarte 17 kontaktierbar ist. Zu deren Halterung ist über dem Kontaktelement 18 eine aus dem Deckelelement herausklappbare Kassettenaufnahme 20 angeordnet, unter der das Deckelelement entsprechend ausgeschnitten ist. In Fig.1 ist die hochgeklappte Stellung dargestellt, die die Einführung der Mini-Chipkarte 17 ermöglicht. Nach deren Einschub in das Kassettenfach wird dieses in die Ebene des Deckelelements 6 eingeklappt und wird damit die Kontaktierung des Chipfeldes 19 mit über das Kontaktelement 18 mit der PCMCIA-Karte vorgenommen. Dazu kann das Kontaktelement 18 als Stecker oder auch als Leitgummistreifen 21 gemäß Fig.2 der Zeichnung ausgebildet sein. Bei dem dort dargestellte Ausführungsbeispiel einer Kontaktiereinheit ist der Kassettenteil durch einen Längssteg 22 in zwei Fächer unterteilt, in die zwei entsprechend klein ausgebildete Minichip-Speicherkarten eingesetzt werden können, die durch das Leitgummi 21 links und durch den Steckerteil 23 rechts kontaktierbar sind.

Die Kassettenaufnahme der Fig. 2 weist einen auf das Deckelelement 6 aufgesetzten Kassettenrahmen 24 mit Gelenkteil für den Klappmechanismus und vorn angebrachtem Rast- und Entrastmechanismus 25 auf. Aufgrund der schrägen Kassettenlage beim Beladen mit bestimmtem Anstellwinkel findet beim Schließen eine Kontaktselbstreinigung statt, da die beiderseitigen Kontaktflächen während der Schließbewegung der Kassette aneinanderreiben mit einer sich in der Positionierung verändernden Reibkante. Durch die im Benutzungszustand völlig geschlossene Kassette sind die Kontaktelemente vor Zugriff und Verschmutzung geschützt.

Im Kassettenrahmen sind neben dem Rastmechanismus 25 Andruck- und Haltefedern 26 angeordnet, durch die die eingeschobenen Chipkarten in die Kontaktfunktionslage gebracht werden. Zusätzlich können sich in der Kassettenaufnahme 20 seitlich Andruckfedern befinden, die die Karten seitlich einklemmen und Schutz gegen Herausfallen bei geöffnetem Zustand der Kassette bieten.

### Bezugszeichenliste

- 1: Kontaktiereinheit
- 2: Gehäuse
- 3: Basisplatte
- 4: Anschlußfeld
- 5: Einschubführung
- 6: Deckelelement
- 7: PCMCIA-Leiterplatte
- 8: Einschubkanal
- 9: Chipkarte
- 10: Einschubschlitz
- 11: Chipfeld
- 11': Kontaktelemente
- 12: Blechabdeckung
- 13: Anschläge
- 14: Klemmnocken
- 15: Aussparungen, Ausnehmung
- 16: Teilkreis-Ausnehmungen
- 17: Mini-Chipkarte
- 18: Kontaktelement
- 19: Chipfeld
- 20: Kassettenaufnahme
- 21: Leitgummistreifen
- 22: Längssteg
- 23: Steckerteil
- 24: Kassettenrahmen
- 25: Rast-/Entrastmechanismus
- 26: Andruck- und Haltefedern
- 27: Rahmen

## Patentansprüche

1. Kontaktiereinheit für ein kartenförmiges Trägerelement elektronischer Baugruppen, insbesondere nach PCMCIA-Norm, mit einem Gehäuse (2), welches an einem stirnseitigen Ende des Gehäuses (2) ein Anschlussfeld (4), einen an dem dem Anschlussfeld (4) gegenüberliegenden stirnseitigen Ende des Gehäuses (2) mündenden schlitzartigen Einschubkanal (8), in den das kartenförmige Trägerelement, insbesondere eine Chipkarte (9) nach ISO 7816, einschiebbar ist, und eine parallel zum Einschubkanal (8) im Gehäuse (2) angeordnete, elektrisch mit dem Anschlussfeld (4) verbundene Leiterplatte (7), welche an einer Oberfläche mit Kontaktelementen (11') für die Kontaktierung des kartenförmigen Trägerelements (9) ausgerüstet ist, aufweist, wobei der Einschubkanal (8) zwischen einer Basisplatte (3) des Gehäuses (2) und der Leiterplatte (7) seitlich offen ausgebildet ist und eine Einschubführung (5) für das kartenförmige Trägerelement (9) an dem dem Anschlußfeld (4) gegenüberliegenden Ende aufweist und wobei am Anschlußfeld (4) zwei die Einstecktiefe für das kartenförmige Trägerelement (9) eckseitig begrenzende Anschläge (13) vorgesehen sind,
**dadurch gekennzeichnet,**
**dass** die Einschubführung (5) für das kartenförmige Trägerelement (9) über den Einschubbereich hinaus sich erstreckend in Form seitlicher Abdeckungen (12) bis in den Bereich des Anschlußfeldes (4) verlängert ist, und dass das Gehäuse (2) einen Rahmen (27) aufweist, der die Leiterplatte (7) mit Abstand parallel zur Basisplatte (3) derart hält, dass der Einschubkanal (8) für das kartenförmige Trägerelement (9) gebildet ist, der endseitig durch die beiden Anschläge (13) begrenzt ist, wobei die seitlichen Abdeckungen (12) zwischen Einschubführung (5) und Anschlußfeld (4) den Rahmen (27) bis zur Dicke der Leiterplatte (7) bedecken und den Einschubkanal (8) seitlich freilassen.

2. Kontaktiereinheit nach Anspruch 1, **dadurch gekennzeichnet, dass** die Anschläge (13) eine an die Eckenform des kartenförmigen Trägerelementes (9) angepaßte Konturschräge oder einen an die Eckenform des kartenförmigen Trägerelements (9) angepaßten Konturradius aufweisen.

3. Kontaktiereinheit nach Anspruch 1 oder Anspruch 2, **dadurch gekennzeichnet, dass** der Rahmen (27) als einstückiges Kunststoffteil ausgebildet und mit der Basisplatte (3) und einem Deckelelement (6) des Gehäuses (2) zu einer Einheit verbunden ist.

4. Kontaktiereinheit nach einem der Ansprüche 1 bis 3, **dadurch gekennzeichnet, dass** die seitlichen Abdeckungen (12) an einem den Rahmen (27) an der Oberseite abschließenden Deckelelement (6), insbesondere aus Blech, durch leistenförmige Abbiegungen zur U-Querschnittsform ausgebildet sind.

5. Kontaktiereinheit nach Anspruch 3 oder Anspruch 4, **dadurch gekennzeichnet, dass** die Basisplatte (3) und das Deckelelement (6) als einstückiges Blechteil ausgebildet sind.

6. Kontaktiereinheit nach einem der Ansprüche 1 bis 5, **dadurch gekennzeichnet, dass** an der Einschubführung (5) für das kartenförmige Trägerelement (9) eine Verriegelungeinrichtung, vorzugsweise in Form zweier mit den Anschlägen (13) korrespondierender Klemmnocken (14), vorgesehen ist, mit der das kartenförmige Trägerelement (9) in seiner Endposition - bei Bedarf wieder entnehmbar - sicherbar ist.

7. Kontaktiereinheit nach einem der Ansprüche 1 bis 6, **dadurch gekennzeichnet, dass** die Einschubführung (5) mit Einlaufschrägen ausgestattet ist.

8. Kontaktiereinheit nach Anspruch 6 oder Anspruch 7, **dadurch gekennzeichnet, dass** der den Klemmnocken (14) gegenüberliegende Bereich mit einer Ausnehmung (15) zurückspringend ausgebildet ist.

## Claims

1. A contact unit for a card-shaped carrier element of electronic assemblies, particularly in accordance with the PCMCIA-Standard, including a housing (2) which includes, at one end of the housing (2), a connector (4), a slot-insertion passage (8), which opens at the end of the housing (2) opposite to the connector field (4) and into which the card-shaped carrier element, particularly a chip card (9) in accordance with ISO 7816, may be inserted, and a circuit board (7), which is arranged in the housing (2) parallel to the insertion passage (8) and is electrically connected to the connector field (4) and is provided on one surface with contact elements (11') for contacting the card-shaped carrier area element (9), the insertion passage (8) being laterally open between a base plate (3) of the housing (2) and the circuit board (7) and having an insertion guide (5) for the card-shaped carrier element (9) at the end opposite to the connector field (4) and wherein two abutments (13) are provided on the connector field (4), which limit the insertion depth of the card-shaped carrier element (9) at the comers, **characterised in that** the insertion guide (5) for the card-shaped carrier element (9) is extended beyond the insertion region extending in the form of lateral covers (12) into the vicinity of the connector field (4) and that the housing (2) has a frame (27) which holds the circuit board (7) at a spacing parallel to the base plate (3) such that the insertion passage (8) for the card-shaped carrier element (9) is formed, which is defined at the end by the two abutments (13), wherein the lateral covers (12) cover the frame (27) between the insertion guide (5) and the connector field (4) to the thickness of the circuit board (7) and laterally expose the insertion passage (8).

2. A contact unit as claimed in Claim 1, **characterised in that** the abutment (13) have contour bevels matched to the corner shape of the card-shaped carrier element (9) or a contour radius matched to the corner shape of the card-shaped carrier element (9).

3. A contact unit as claimed in Claim 1 or Claim 2 **characterised in that** the frame (27) is a one-piece plastic component and is connected to the base plate (3) and a cover element (6) of the housing (2) to form a unit.

4. A contact unit as claimed in one of Claims 1 to 3, **characterised in that** the lateral covers (12) are constituted by strip-like bent portions on a cover element (6) closing the upper side of the frame (27) to form a U-shaped cross sectional shape.

5. A contact unit as claimed in claim 3 or Claim 4, **characterised in that** the base plate (3) and the cover plate (6) are constructed in the form of an integral sheet metal component.

6. A contact unit as claimed in one of Claims 1 to 5, **characterised in that** provided on the insertion guide (5) for the card-shaped carrier element (9) there is a locking device, preferably in the form of two wedging cams (14) corresponding to the abutments (13), with which the card-shaped carrier element (9) may be secured in its end position and is removable again, if required.

7. A contact unit as claimed in one of Claims 1 to 6, **characterised in that** the insertion guide (5) is provided with entry bevels.

8. A contour unit as claimed in Claim 6 or Claim 7, **characterised in that** the region opposite to the wedging cams (14) is set back with a recess (15).

## Revendications

1. Unité de contact pour un élément de support en forme de carte pour des composants électroniques, en particulier selon la norme PCMCIA, avec un boîtier (2) portant à une extrémité frontale du boîtier (2) une zone de connexion (4), un canal d'insertion (8) en forme de fente débouchant à l'extrémité frontale du boîtier (2) opposée à la zone de connexion (4), canal dans lequel l'élément de support en forme de carte, en particulier une carte à puce (9) selon ISO 7816, peut être inséré, et une carte de circuits (7) disposée parallèlement au canal d'insertion (8) dans le boîtier (2) reliée électriquement à la zone de connexion (4), et équipée d'éléments de contact (11') sur une surface pour la mise en contact de l'élément de support en forme de carte (9), le canal d'insertion (8) étant ouvert latéralement entre une plaque de base (3) du boîtier (2) et la carte de circuits (7) et présentant un guide d'insertion (5) pour l'élément de support en forme de carte (9) à l'extrémité opposée à la zone de connexion (4), et la zone de connexion (4) étant pourvue de deux butées (13) limitant la profondeur d'insertion de l'élément de support en forme de carte (9) au niveau des angles, **caractérisée en ce que** le guide d'insertion (5) pour l'élément de support en forme de carte (9) est prolongé au-delà de la zone d'insertion sous la forme de capots latéraux (12) jusqu'au niveau de la zone de connexion (4) et **en ce que** le boîtier (2) possède un cadre (27) qui retient la carte de circuits (7) parallèlement à distance de la plaque de base (3) de manière à former le canal d'insertion (8) pour l'élément de support en forme de carte (9), le canal étant délimité à son extrémité par les deux butées (13), les capots latéraux (12) entre le guide d'insertion (5) et la zone de connexion (4) couvrant le cadre (27) jusqu'à l'épaisseur de la carte de circuits (7) et laissant libre les côtés du canal d'insertion (8).

2. Unité de contact selon la revendication 1, **caractérisée en ce que** les butées (13) présentent un profil en biseau adapté à la forme d'angle de l'élément de support en forme de carte (9) ou un profil courbe adapté à la forme d'angle de l'élément de support en forme de carte (9).

3. Unité de contact selon la revendication 1 ou 2, **caractérisée en ce que** le cadre (27) est conformé comme une pièce en matière plastique d'un seul tenant et assemblé avec la plaque de base (3) et un élément formant couvercle (6) du boîtier (2) pour former une unité.

4. Unité de contact selon l'une quelconque des revendications 1 à 3, **caractérisée en ce que** les capots latéraux (12) sont formés sur un élément formant couvercle (6) se raccordant à la partie supérieure du cadre (27), en particulier en tôle, par des pliages en forme de bords tombés donnant une section en forme de U.

5. Unité de contact selon la revendication 3 ou 4, **caractérisée en ce que** la plaque de base (3) et l'élément formant couvercle (6) sont conformés comme une pièce en tôle d'un seul tenant.

6. Unité de contact selon l'une quelconque des revendications 1 à 5, **caractérisée en ce qu'**il est prévu au niveau du guide d'insertion (5) pour l'élément de support en forme de carte (9) un dispositif de verrouillage, prenant de préférence la forme de deux ergots de serrage (14) correspondant aux butées (13), qui permet de bloquer l'élément de support en forme de carte (9) dans sa position finale, de manière amovible si nécessaire.

7. Unité de contact selon l'une quelconque des revendications 1 à 6, **caractérisée en ce que** le guide d'insertion (5) est pourvu de biseaux d'introduction.

8. Unité de contact selon la revendication 6 ou 7, **caractérisée en ce que** la zone faisant face aux ergots de serrage (14) est conformée de manière à permettre un retour élastique, avec un évidement (15).
